**Europäisches Patentamt**

**European Patent Office**

**Office européen des brevets**

(11) Numéro de publication: **0 056 354**
**A1**

# (12) DEMANDE DE BREVET EUROPEEN

(21) Numéro de dépôt: **82420005.9**

(22) Date de dépôt: **11.01.82**

(51) Int. Cl.³: **B 29 G 7/02,** B 29 D 27/00

(30) Priorité: **12.01.81 FR 8100692**

(43) Date de publication de la demande: **21.07.82**
**Bulletin 82/29**

(84) Etats contractants désignés: **AT BE CH DE FR GB IT LI LU NL SE**

(71) Demandeur: **Lassus, Gérard Georges, 7, Ancienne Route de Brindas, F-69290 Craponne (Rhône) (FR)**

(72) Inventeur: **Lassus, Gérard Georges, 7, Ancienne Route de Brindas, F-69290 Craponne (Rhône) (FR)**

(74) Mandataire: **Maureau, Pierre, Cabinet GERMAIN & MAUREAU Le Britannia - Tour C 20, Boulevard E. Déruelle, F-69003 Lyon (FR)**

(54) **Procédé et installation pour la fabrication de panneaux en mousse expansée.**

㊼ Fabrication de panneaux en mousse formo-phénolique. La résine est coulée en continu, par une tête (13), sur une bande sans fin transporteuse (10) entrant dans un conformateur (1). L'expansion de cette résine s'effectue en continu sans contrainte, dans l'espace de section rectangulaire délimité par la bande transporteuse (10), les parois latérales (4) du conformateur (1) et une autre bande transporteuse (11). La mousse expansée est ainsi conformée en une bande (27) de largeur et d'épaisseur déterminées, qui parvient sur une table de coupe (29) où une scie (36, 37) la débite, sans interrompre son défilement, en des panneaux (30) de longueur déterminée (L). L'expansion peut s'effectuer entre deux bandes de papier (16, 21) se déroulant de deux rouleaux (15, 20) et introduites aussi dans le conformateur (1).

- 1 -

La présente invention concerne un procédé de fabrication de panneaux en mousse expansée, notamment en mousse formo-phénolique, ainsi qu'une installation destinée à la mise en oeuvre de ce procédé.

La fabrication de panneaux en mousse formo-phénolique, utilisés pour l'isolation thermique, se fait traditionnellement par sciage de blocs, ce qui implique la production d'une mousse à forte densité (au minimum 35kg/m3) afin d'obtenir une résistance mécanique suffisante pour la manipulation de ces panneaux. De plus, la mise en oeuvre de ce procédé s'accompagne d'énormes pertes de matières dues au sciage des six faces du bloc, qui ne sont pas commercialisables en raison de l'effet de "peau" rendant ces faces inutilisables. Enfin, cette méthode de fabrication reste très peu mécanisée, ce qui contribue à élever le prix de revient du produit en question et limite donc son utilisation, alors que son emploi devrait être généralisé en raison de sa tenue au feu très poussée et du fait qu'il ne dégage aucun gaz toxique lorsqu'il est soumis à une flamme.

Des essais de mécanisation de la fabrication de panneaux en mousse expansée formo-phénolique ont déjà été tentés, avec des procédés consistant à couler en continu de la résine sur un support entraîné en translation, à réaliser en continu l'expansion de la résine au cours de son avance sur ledit support, tout en la conformant en une bande de section rectangulaire de largeur et d'épaisseur déterminées, et à débiter ladite bande en tronçons de longueur déterminée, constituant des panneaux finis, sans interrompre son défilement.

Dans les procédés de ce genre actuellement connus, l'expansion de la résine commence de façon libre, puis se poursuit dans un conformateur où la mousse obtenue est soumise à des contraintes, pouvant résulter de l'application d'un plateau de couverture articulé exerçant une pression sur la mousse, ou de l'action de parois latérales mobiles transversalement. La conformation sous

- 2 -

pression, ainsi réalisée, provoque un écrasement des cellules de la mousse expansée, ce qui affaiblit les qualités mécaniques et d'isolation thermique de ce produit.

La présente invention remédie à ces inconvénients, en fournissant un procédé simple et économique de fabrication de panneaux en mousse expansée, et plus particulièrement en mousse formo-phénolique, permettant de conformer la matière en cours d'expansion de manière à obtenir directement des panneaux homogènes de section rectangulaire, avec une amélioration des qualités de finition et d'isolation de tels panneaux.

A cet effet, le procédé selon l'invention, consistant à couler en continu de la résine sur un support entraîné en translation, à réaliser en continu l'expansion de cette résine au cours de son avance sur ledit support, tout en la conformant en une bande de section rectangulaire de largeur et d'épaisseur déterminées, et à débiter ladite bande en tronçons de longueur déterminée, constituant des panneaux finis, sans interrompre son défilement, est remarquable par le fait que l'expansion de la résine s'effectue de façon libre à l'entrée d'un espace de conformation de section rectangulaire correspondant à la section définitive des panneaux à réaliser, espace dont la section est remplie complétement lorsque la mousse a atteint son point de gélification, sans qu'aucune contrainte soit exercée sur cette mousse.

Le procédé selon l'invention, permettant une fabrication en continu de panneaux en mousse expansée formo-phénolique, a pour premier avantage de n'entraîner aucune perte de matière puisqu'il donne directement des panneaux finis. La résine coulée sur le support, tel que bande transporteuse, s'expanse et se polymérise aux dimensions définies par des moyens de conformation, pour donner le produit fini sous forme de bande ininterrompue, ceci par exemple en un temps de 120 secondes et sur une longueur de conformation de 3 mètres. Cette bande de mousse expansée est ensuite débitée, par des coupes faites transversalement sans arrêter son avance, pour obtenir des panneaux d'une longueur unitaire comprise par exemple entre 0;5 mètre et 3 mètres, panneaux qui peuvent être directement évacués vers un lieu de stockage.

L'expansion en continu a un autre avantage dû à l'exothermie de la réaction de la résine, qui est de permettre l'obtention d'une mousse expansée et polymérisée ayant une densité de 15 kg/m3 minimum. Cette réduction de la densité, comparativement aux mousses formo-phénoliques actuelles courantes, abaisse la conductibilité thermique du matériau et améliore donc ses qualités d'isolation. Il est encore à noter que malgré leur légéreté, les panneaux isolants ainsi obtenus ont une résistance mécanique supérieure à celle des panneaux actuellement obtenus par sciage de blocs, ceci grâce à l'effet de "peau" superficielle ("peau" qui reste en place sur le panneau fini).

Une mise en oeuvre correcte du procédé selon l'invention exige, bien entendu, une synchronisation entre le débit de matière coulé sur le support, et l'avance de ce support, pour qu'après une expansion libre le remplissage de la section de l'espace de conformation soit exactement obtenu au moment où la mousse parvient à son expansion maximale (point de gélification). Si la section de conformation n'est pas complétement remplie, il subsistera des lacunes dans les panneaux. A l'inverse, si l'expansion tend à se poursuivre après remplissage de la section de conformation, l'on observe des contraintes, et il y a risque d'écrasement des cellules extérieures de la mousse, ou de densification de l'ensemble de la masse.

Le procédé selon l'invention, convenablement mis en oeuvre et régulé par des moyens qui seront définis ci-après, permet de fabriquer des panneaux isolants en mousse expansée plus économiques et de meilleure qualité que la laine de verre, donc permet de remplacer ce dernier matériau, ce qui n'était pas possible dans le cas des panneaux réalisés avec les méthodes antérieures.

Enfin, le caractère "continu" du procédé objet de l'invention permet de mécaniser et même d'automatiser sa mise en oeuvre industrielle, laquelle peut se faire avec une main-d'oeuvre extrêmement réduite pour un rendement horaire élevé, ce qui contribue encore à abaisser le coût de production des panneaux.

L'installation envisagée pour cette mise en oeuvre industrielle du procédé défini ci-dessus comprend principalement, selon la présente invention, d'amont en aval : une tête de coulée de résine, surmontant la région arrière d'une première bande sans fin transporteuse ; un conformateur de section rectangulaire comportant deux parois latérales parallèles, entre lesquelles sont montés des rouleaux transversaux inférieurs pour le guidage de la première bande sans fin transporteuse, ainsi que des rouleaux transversaux supérieurs pour le guidage d'une seconde bande sans fin transporteuse qui surmonte la première ; à la sortie d'une zone de refroidissement faisant suite au conformateur, une table de coupe avec un chariot déplaçable longitudinalement et supportant une scie mobile transversalement ; et une table de réception pour les panneaux en mousse coupés.

L'expansion de la résine s'effectue donc, au fur et à mesure de son avance sur la bande transporteuse inférieure, à l'intérieur d'un espace de conformation délimité par cette bande transporteuse, par les deux parois latérales et par la bande transporteuse supérieure. Les parois latérales restent fixes, mais elles sont avantageusement prévues interchangeables, des moyens étant en outre prévus pour régler la distance séparant les deux bandes sans fin transporteuses, de manière à permettre une modification aisée de l'épaisseur de la bande de mousse expansée qui sera débitée en panneaux. Les deux bandes sans fin transporteuses sont entraînées en synchronisme par des moyens moteurs convenables, associés à un système de régulation assurant la synchronisation avec le débit de la tête de coulée, pour éviter une accumulation de matière ou au

- 5 -

contraire une expansion laissant des lacunes. Ce système de régulation peut comprendre un capteur mesurant l'épaisseur de matière sur la bande sans fin transporteuse inférieure, à l'entrée du conformateur, et relié à un régulateur électronique de la vitesse d'avance des deux bandes sans fin.

De préférence, pour éviter un contact direct entre la résine, devenant mousse expansée, et les éléments du conformateur, il est prévu des moyens de support et de déroulage de deux rouleaux de papier, l'un placé en amont de la tête de coulée, de manière à délivrer une bande de papier inférieure, qui est étalée sur la première bande sans fin transporteuse et dont les bords sont relevés pour venir contre les parois latérales du conformateur, et une bande de papier supérieure s'intercalant entre la mousse en expansion et la seconde bande sans fin transporteuse. Ainsi, la bande de mousse obtenue se collera contre ces bandes de papier, qui l'entourent sur toutes ses faces, et non pas contre les éléments du conformateur. Le papier reste en place sur la bande de mousse expansée, ce qui peut même améliorer l'aspect des panneaux.

La table de coupe, avec sa scie déplaçable suivant deux directions perpendiculaires, permet de couper transversalement la bande de mousse expansée, éventuellement enrobée de papier comme expliqué ci-dessus, sans arrêter son avance dans le conformateur. Il est à noter que la scie, ayant commencé de pénétrer dans un bord de la bande, est entraînée longitudinalement par cette dernière, donc ne nécessite pas de moyens d'entraînement spéciaux dans le sens longitudinal. Il convient seulement d'assurer le rappel en arrière du chariot supportant la scie, après une coupe, ce qui peut être fait par des moyens tels que : descente sur une rampe légèrement inclinée, utilisation d'un contrepoids, ressort, etc... La table de réception peut comprendre au moins un rouleau d'entraînement permettant le dégagement des derniers panneaux coupés, et un détecteur de l'arrivée de l'extrémité avant de la bande de

- 6 -

mousse expansée non débitée, détecteur qui commande la mise en marche de la scie pour la coupe du panneaux suivant, ce qui assure la synchronisation de la table de coupe avec le défilement de la bande de mousse expansée.

De toute façon, l'invention sera mieux comprise à l'aide de la description qui suit, en référence au dessin schématique annexé représentant, à titre d'exemple non limitatif, une forme d'exécution de cette installation pour la fabrication en continu de panneaux en mousse expansée :

Figure 1 est une vue de côté d'une installation conforme à l'invention (représentée en deux tronçons compte tenu de sa longueur) ;

Figure 2 est une vue en coupe transversale et à plus grande échelle de cette installation, suivant 2-2 de figure 1 c'est-à-dire au travers du conformateur ;

Figure 3 est une vue partielle en plan par dessus suivant la flèche F de figure 1, montrant le détail de la table de coupe et expliquant les déplacements de la scie.

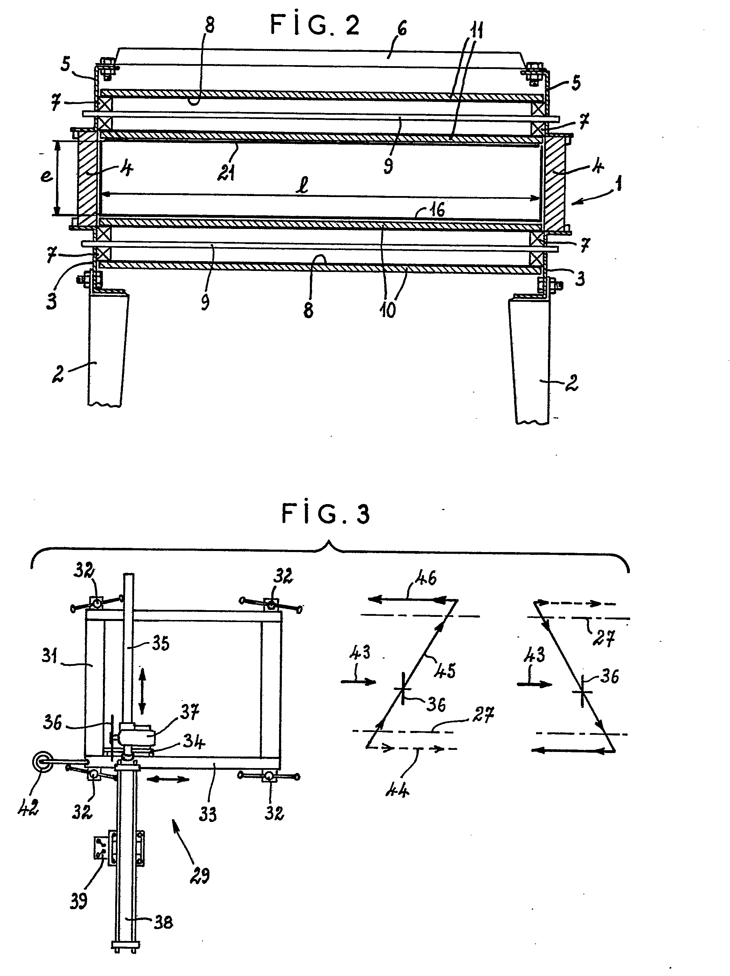

L'installation représentée comprend essentiellement un conformateur, désigné dans son ensemble par le repère 1, et supporté par des pieds 2. Comme le montre plus particulièrement la figure 2, ces pieds 2 maintiennent des profilés longitudinaux inférieurs 3, qui sont reliés par l'intermédiaire de parois verticales en bois 4 à des profilés longitudinaux supérieurs 5. Des entretoises transversales 6 relient entre eux les deux profilés supérieurs 4.

Les profilés longitudinaux 3 et 5 sont perforés à intervalles réguliers, et supportent, par l'intermédiaire de roulements à billes 7, des rouleaux transversaux 8 dont les axes sont indiqués en 9. Les rouleaux 8 servent de supports et de guides pour deux bandes sans fin transporteuses 10 et 11, l'une inférieure et l'autre supérieure, par exemple réalisées en "Téflon".

Les parties arrière des deux bandes transporteuses 10 et 11, où sont prévues des vis de réglage 12 de la tension de ces bandes, sont décalées, c'est-à-dire que la bande inférieure 10 s'étend plus loin, vers l'amont, que la bande supérieure 11. Au-dessus de la partie de la bande inférieure 10 non surmontée par la bande supérieure 11, est disposée une tête de coulée 13 alimentée en résine formo-phénolique.

A l'extrémité amont de l'installation, un chevalet 14 supporte un premier rouleau de papier 15 , qui se déroule en formant une bande 16 parvenant sur la bande transporteuse inférieure 10, au-dessous de la tête de coulée 13, de manière à recevoir la résine. Dans la région d'arrivée de la bande de papier 16 sur la bande transporteuse 10, sont prévus des rouleaux presseurs 17 appliqués sur la partie centrale de la bande de papier 16, tandis que les bords de cette bande de papier sont relevés par des flasques 18, de manière à venir contre les parties latérales 4 du conformateur 1 (à l'intérieur duquel la bande de papier 16 possède un profil en "U").

Un support 19, monté au-dessus du conformateur 1, en aval de la tête de coulée 13, permet de maintenir et de dérouler un second rouleau de papier 20, pour introduire une autre bande de papier 21 dans le conformateur 1.

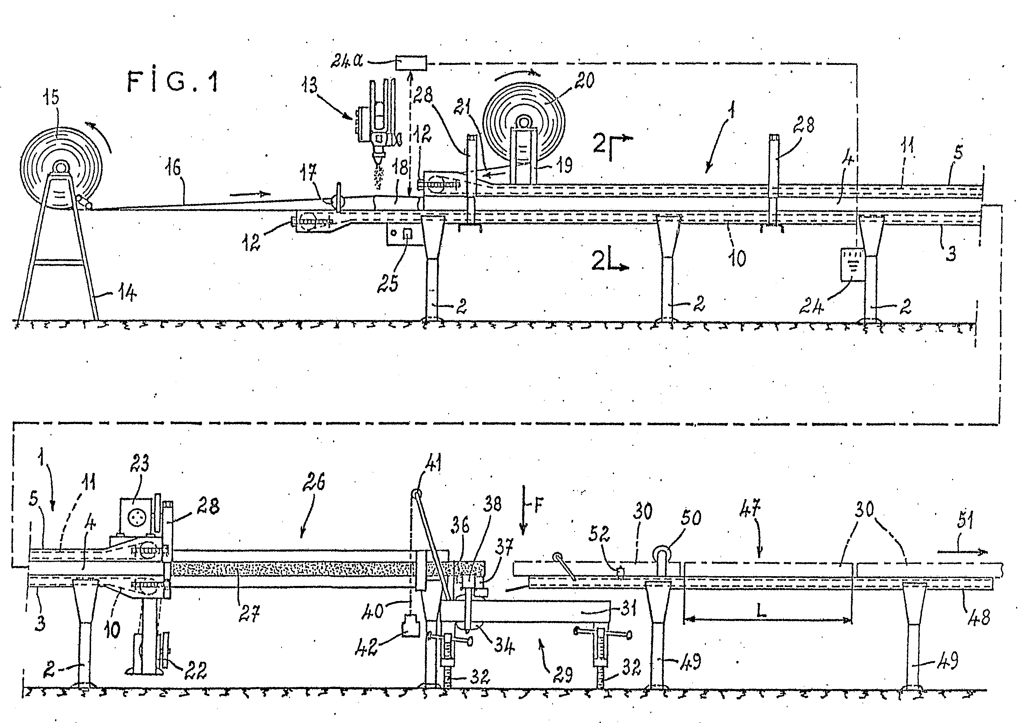

Ainsi la résine coulée par la tête 13 s'engage dans le conformateur 1, entourée de tous côtés par du papier 16 ou 21 qui évite son contact direct avec les éléments du conformateur. Cette résine avance dans le conformateur 1, en s'expansant et se polymérisant, sous l'effet d'entraînement des bandes sans fin transporteuses 10 et 11, elles-mêmes mises en mouvement, de manière synchronisée, par des groupes motoréducteurs respectifs 22 et 23 contrôlés à partir d'un régulateur électronique de vitesse 24. Un capteur 24a, disposé au-dessus de l'entrée du conformateur 1, effectue une mesure de distance suivant le trajet indiqué en traits pointillés sur la figure 1 ; cette mesure qui correspond à l'épaisseur de matière sur la bande transporteuse inférieure 10, est

- 8 -

transmise au régulateur 24 pour permettre un contrôle de vitesse en fonction du débit de la tête de coulée 13. Il est aussi prévu un contacteur 25 pour la commande manuelle de marche/arrêt des groupes d'entraînement 22 et 23 et pour l'accélération de ces derniers.

A la sortie du conformateur 1, qui se prolonge par une zone de refroidissement 26, l'on obtient une bande de mousse expansée formo-phénolique 27, défilant en continu, dont la largeur $l$ est égale à l'espacement des parois latérales 4 du conformateur, et dont l'épaisseur $e$ correspond à l'intervalle entre le brin supérieur de la bande transporteuse inférieure 10 et le brin inférieur de la bande transporteuse supérieure 11. L'épaisseur $e$ de cette bande de mousse expansée 27 est modifiable en remplaçant les parois 4 par d'autres parois de hauteur différente, et en réglant la distance entre les profilés inférieurs 3 et supérieurs 5, donc entre les deux bandes transporteuses 10 et 11, au moyen de vérins à vis verticaux 28. Ce réglage d'épaisseur peut, par exemple, se faire entre les valeurs extrêmes 0 et 150 mm.

L'extrémité avant de la bande de mousse expansée 27 parvient, en défilement continu, sur une table de coupe 29, faisant suite à la zone de refroidissement 26, et permettant de débiter ladite bande 27 en panneaux 30 de longueur déterminée $L$. La structure de la table de coupe 29, ainsi que son fonctionnement, sont plus particulièrement illustrés par la figure 3 :

Un châssis 31, monté sur des pieds munis de vérins à vis 32 pour son réglage en hauteur, comporte, sur l'un de ses côtés, des rails de guidage longitudinaux 33 pour un chariot 34. Ce dernier porte une traverse 35, le long de laquelle est déplaçable une scie à lame circulaire 36, entraînée en rotation par un moteur électrique 37. Le déplacement transversal de la scie 36 est obtenu par un vérin pneumatique à double effet 38, dont l'inversion en fin de course est commandée par des moyens indiqués en 39. Le chariot 34 est, par ailleurs, relié par l'intermédiaire d'un câble 40, passant sur une poulie 41, à un contrepoids 42 qui le rappelle vers l'arrière (voir aussi figure 1).

Au départ de la scie, avant une première coupe, la lame 36 se trouve en position arrière, par exemple sur le côté droit de la bande de mousse 27 qui avance suivant la flèche 43 . L'actionnement du vérin 38 fait pénétrer la lame 36 dans le bord droit de la bande 27, puis provoque l'avance de cette lame 36 sur toute la largeur de la bande 27. Simultanément, la lame 36 est entraînée vers l'avant par le défilement de cette bande 27, si bien que, comme le montre le premier schéma :

- la scie entraîne avec elle, vers l'avant, le chariot 34 qui se déplace le long de ses rails 33, comme le symbolise la flèche 44,en faisant monter le contrepoids 42 ;
- la scie elle-même décrit un déplacement en diagonale, symbolisé par la flèche 45, au cours duquel sa lame 36 reste perpendiculaire à la bande 27 et effectue une coupe à 90°, sur toute la largeur de la bande.

Finalement, la lame 36 sort de la bande de mousse 27 qu'elle a entièrement coupée, et elle parvient sur le côté gauche de cette bande. Le contrepoids 42 ramène alors le chariot 34, donc la lame de scie 36, vers l'arrière (flèche 46).

Comme le montre le second schéma, la coupe suivante s'effectue suivant le même principe de déplacement diagonal de la lame 36, mais celle-ci est ramenée depuis le côté gauche vers le côté droit de la bande 27, le vérin 38 étant actionné dans le sens inverse. En fin de coupe, le contrepoids 42 ramène l'ensemble des éléments mobiles dans la position initiale définie plus haut, et le même cycle peut recommencer indéfiniment, ce qui permet de débiter la bande 27 en panneaux 30 d'une manière continue, sans arrêter son avance dans le conformateur 1.

Ces panneaux coupés 30 parviennent sur une table de réception 47, constituée par un châssis 48 monté sur des pieds 49 et muni de rouleaux transversaux tournant sur des roulements à billes. Le châssis 48 supporte encore un

0056354

rouleau d'entraînement 50, permettant le dégagement automatique des derniers panneaux 30 coupés qui finalement seront évacués à l'extrémité aval de l'installation, suivant la flèche 51. Enfin un détecteur 52, supporté par la table de réception 47, est disposé de manière à commander la mise en marche de la scie 36 au moment où il détecte l'arrivée de l'extrémité avant de la bande de mousse 27 non débitée, afin de couper le panneau suivant.

- 11 -

REVENDICATIONS

1. - Procédé pour la fabrication de panneaux en mousse expansée, notamment en mousse formo-phénolique, consistant à couler en continu de la résine sur un support (10, 21) entraîné en translation, à réaliser en continu l'expansion de cette résine au cours de son avance sur ledit support, tout en la conformant en une bande (27) de section rectangulaire de largeur (1) et d'épaisseur (e) déterminées, et à débiter ladite bande en tronçons de longueur (L) déterminée,.constituant des panneaux finis (30), sans interrompre son défilement, caractérisé en ce que l'expansion de la résine s'effectue de façon libre à l'entrée d'un espace de conformation (1) de section rectangulaire correspondant à la section définitive des panneaux (30) à réaliser, espace dont la section est remplie complètement lorsque la mousse a atteint son point de gélification, sans qu'aucune contrainte soit exercée sur cette mousse.

2. - Procédé pour la fabrication de panneaux en mousse expansée selon la revendication 1, caractérisé en ce que l'expansion de la résine s'effectue entre une bande de papier inférieure (16) et une bande de papier supérieure (21) qui sont entraînées avec cette résine dans l'espace de conformation (1), et contre lesquelles se colle la bande de mousse expansée (27) obtenue dans l'espace de conformation (1).

3. - Installation pour la fabrication de panneaux en mousse expansée, notamment en mousse formo-phénolique, destinée à la mise en oeuvre du procédé selon la revendication 1 ou 2, caractérisée en ce qu'elle comprend, d'amont en aval : une tête de coulée de résine (13), surmontant la région arrière d'une première bande sans fin transporteuse (10) ; un conformateur (1) de section rectangulaire comportant deux parois latérales parallèles (4), entre lesquelles sont montés des rouleaux transversaux inférieurs (8) pour le guidage de la première bande sans fin transporteuse (10), ainsi que des rouleaux trans-

0056354

versaux supérieurs (8) pour le guidage d'une seconde bande sans fin transporteuse (11) qui surmonte la première; à la sortie d'une zone de refroidissement (26) faisant suite au conformateur (1), une table de coupe (29) avec un chariot (34) déplaçable longitudinalement et supportant une scie (36,37) mobile transversalement ; et une table de réception (47) pour les panneaux en mousse coupés (30).

4. - Installation pour la fabrication de panneaux en mousse expansée selon la revendication 3, caractérisée en ce que les parois latérales (4) du conformateur (1) sont interchangeables, des moyens (28) étant en outre prévus pour régler la distance séparant les deux bandes sans fin transporteuses (10, 11), de manière à permettre une modification de l'épaisseur (e) de la bande de mousse expansée (27) qui sera débitée en panneaux (30).

5. - Installation pour la fabrication de panneaux en mousse expansée selon la revendication 3 ou 4, caractérisée en ce qu'elle comprend un capteur (24a) mesurant l'épaisseur de matière sur la bande sans fin transporteuse inférieure (10), à l'entrée du conformateur (1), et relié à un régulateur électronique (24) de la vitesse d'avance des deux bandes sans fin (10, 11).

6. - Installation pour la fabrication de panneaux en mousse expansée selon l'une quelconque des revendications 3 à 5, caractérisée en ce qu'il est prévu des moyens (14,19) de support et de déroulage de deux rouleaux de papier (15,20), l'un placé en amont de la tête de coulée (13), de manière à délivrer une bande de papier inférieure (16) qui est étalée sur la première bande sans fin transporteuse (10) et dont les bords sont relevés pour venir contre les parois latérales (4) du conformateur (1), et une bande de papier supérieure (21) s'intercalant entre la mousse en expansion et la seconde bande sans fin transporteuse (11).

7. - Installation pour la fabrication de panneaux en mousse expansée selon l'une quelconque des revendications 3 à 6, caractérisée en ce que le chariot (34) de la table de coupe (29) porte une traverse (35) le long de laquelle est déplaçable la scie à lame circulaire (36), un vérin à double effet (38) donnant le déplacement transversal de la scie, tandis que le déplacement longitudinal du chariot est obtenu, dans le sens de son avance, par son entraînement par la scie (36) elle-même entraînée par la bande de mousse (27) et, dans le sens de son retour en arrière, par des moyens de rappel tels qu'un contrepoids (42).

8. - Installation pour la fabrication de panneaux en mousse expansée selon l'une quelconque des revendications 3 à 7, caractérisée en ce que la table de réception (47) comprend au moins un rouleau d'entraînement (50) permettant le dégagement des derniers panneaux coupés (30), et un détecteur (52) de l'arrivée de l'extrémité avant de la bande de mousse expansée (27) non débitée, détecteur qui commande la mise en marche de la scie (36, 37) pour la coupe du panneau suivant.

0056354

FIG.1

# FIG. 2

# FIG. 3

0056354

| | Office européen des brevets | **RAPPORT DE RECHERCHE EUROPEENNE** | Numéro de la demande |
|---|---|---|---|
| | | | EP 82 42 0005.9 |

| **DOCUMENTS CONSIDERES COMME PERTINENTS** | | | **CLASSEMENT DE LA DEMANDE (Int. Cl. ³)** |
|---|---|---|---|
| Catégorie | Citation du document avec indication, en cas de besoin, des parties pertinentes | Revendication concernée | |
| X | US - A - 3 761 209 (D. HANTON) <br> * revendication 1; colonne 2, lignes 47 à 53; fig. 1 à 5 * <br>    &   FR - A - 1 599 874 <br> -- | 1 | B 29 G 7/02 <br> B 29 D 27/00 |
| Y | US - A - 3 821 337 (E. BUNCLARK et al.) <br> * revendications 1, 3; fig. * <br> -- | 1,2 | |
| Y | DE - A1 - 2 327 314 (ESSO RESEARCH AND ENGINEERING CO.) <br> * page 11, paragraphes 2 à 4; fig. * <br> -- | 1,2 | **DOMAINES TECHNIQUES RECHERCHES (Int. Cl. ³)** |
| Y <br> A | DE - A - 1 804 725 (IMPERIAL CHEMICAL INDUSTRIES LTD.) <br> * revendications 1, 2; fig. * <br> * revendication 4 * <br> -- | 1 <br> 5 | B 29 D 27/00 <br> B 29 G 7/00 |
| A | DE - B2 - 1 936 684 (ELASTOGRAN MASCHINENBAU GMBH) <br> * revendication 1; colonne 1, lignes 39 à 43; colonne 2, lignes 38 à 41; fig. 1, 2 * <br> -- | 1-3,7 | |
| A | DE - A1 - 2 730 607 (VKI-RHEINHOLD & MAHLA AG) <br> * revendication 5; fig. 1 * <br>    &   FR - A - 2 396 639 <br> --      ./.. | 1-3 | |

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

| X | Le présent rapport de recherche a été établi pour toutes les revendications | | |
|---|---|---|---|
| Lieu de la recherche <br> Berlin | Date d'achevement de la recherche <br> 23-02-1982 | Examinateur <br> FINDELI | |

OEB Form 1503.1  06.78

Office européen
des brevets

**RAPPORT DE RECHERCHE EUROPEENNE**

Numéro de la demande

EP 82 42 0005.9
– page 2 –

| | **DOCUMENTS CONSIDERES COMME PERTINENTS** | | **CLASSEMENT DE LA DEMANDE (Int. Cl.³)** |
|---|---|---|---|
| Catégorie | Citation du document avec indication, en cas de besoin, des parties pertinentes | Revendica-tion concernée | |
| A | US – A – 4 178 144 (C. TABLER) <br> * fig. 1 * | 5 | |
| A | DE – A1 – 2 721 473 (SAINT-GOBAIN IN-DUSTRIES) <br> & FR – A – 2 350 945 | | |
| A | DE – B2 – 2 159 726 (DYNAMIT NOBEL) | | **DOMAINES TECHNIQUES RECHERCHES (Int. Cl.³)** |

OEB Form 1503.2 06.78